# DEMANDE DE BREVET EUROPEEN

(11) **EP 0 597 788 A2**
(43) Date de publication de la demande: **18.05.1994**
(21) Numéro de dépôt: 93470029.5
(22) Date de dépôt: 10.11.1993
(51) Int. Cl.: F16M 13/00

(54) **Dispositif pour supporter simultanément une pluralité de plateaux**

(30) Priorité: 10.11.1992 FR 9213720
(71) Demandeur: Zimmer, Denis, F-57460 Behren Les Forbach (FR)
(72) Inventeur: Zimmer, Denis, F-57460 Behren Les Forbach (FR)
(74) Mandataire: Poupon, Michel

(57) **Abrégé**

L'invention concerne un dispositif pour supporter simultanément une pluralité de plateaux par exemple des plateaux pour pizzas comportant principalement : un pied (1) portant une colonne (3) verticale avec une pluralité de moyens d'accrochage appropriés pour recevoir les plateaux et les maintenir à l'horizontale, caractérisé en ce que les moyens d'accrochage sont des encoches prévues dans la colonne et conformées spécialement pour recevoir et maintenir chacune directement un plateau.

## Description

La présente invention concerne un dispositif pour supporter simultanément une pluralité de plateaux, par exemple des plateaux pour la cuisson ou le réchauffage dans des fours, elle concerne également les plateaux conçus pour coopérer avec le dispositif de support et les moyens de préhension pour ces plateaux.

A l'heure actuelle, les pizzas, tartes, pains ou autres plats à cuire sont posés sur des plateaux ou grilles rectangulaires portés par des rainures prévues dans les parois latérales de l'enceinte de cuisson, ou portés par des glissières horizontales d'une structure amovible ou par des profilés horizontaux portés par un cadre.

Dans tous les cas, en cuisine et pâtisserie domestiques ou professionnelles, il est donc habituel d'utiliser en combinaison des plateaux rectangulaires et deux supports latéraux horizontaux.

Par ailleurs, on connait un porte-grilles à colonne décrit dans le document FR 2 557 443 où l'accrochage est réalisé par des gonds soudés.

On connait également différents présentoirs à patisseries tels que ceux des documents FR 2 151 771, GB 340 490, GB 760 727 qui nécessitent des pièces supplémentaires du type douille, pince à vis, pince ressort et des moyens de blocage tels que des vis.

L'invention a pour but de supprimer les pièces supplémentaires d'accrochage et de blocage et de proposer une réalisation simple, peu coûteuse et permettant d'utiliser directement mais non exclusivement des plateaux en forme de disque, à la taille d'une pizza par exemple.

Tous ces buts sont atteints par le dispositif pour supporter simultanément une pluralité de plateaux, par exemple des plateaux pour pizzas, comportant principalement : un pied portant une colonne verticale avec une pluralité de moyens d'accrochage appropriés pour recevoir les plateaux et les maintenir à l'horizontale, caractérisé en ce que les moyens d'accrochage sont des encoches ou rainures prévues dans la colonne et conformées spécialement pour recevoir et maintenir chacune directement un plateau.

On peut prévoir des plateaux pour coopérer avec ce dispositif et ils se caractérisent en ce que leur fond comporte une rainure à distance constante du bord pour coopérer avec un moyen d'accrochage de la colonne.

On peut prévoir également pour saisir les plateaux chauds, des moyens de préhension avec un cran de retenue pouvant coopérer avec la même rainure du fond de plateau.

On comprendra mieux l'invention à l'aide de la description qui suit faite en référence aux figures annexées suivantes :
- Figure 1 : vue d'ensemble d'un premier mode de réalisation de l'invention,
- Figure 2 : vue latérale d'un support selon un deuxième mode de réalisation de l'invention,
- Figure 3 : vue de dessous d'un plateau destiné à coopérer avec les supports des figures 1 et 2,
- Figure 4 : vue latérale d'une poignée pour plateau de la figure 3,
- Figure 5 : vue latérale d'un support selon un troisième mode de réalisation de l'invention.

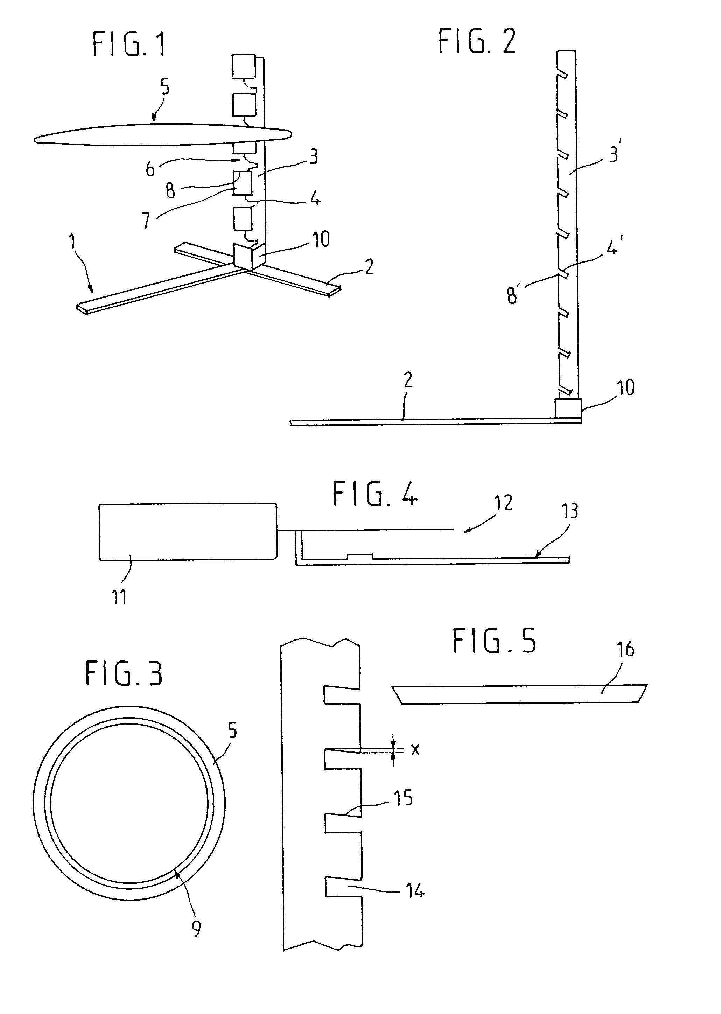

Le dispositif se compose principalement d'un support tel que celui de la figure 1 formé de :
- un pied (1) par exemple à trois barres (2) comme celui de la figure 1, assurant la stabilité.
- une colonne (3) verticale portant sur un de ses plus grands côtés une pluralité d'encoches ou rainures appropriées pour recevoir directement les plateaux et les maintenir à l'horizontale sans nécessiter aucun moyen de fixation ni aucune pièce intermédiaire.

De préférence la colonne (3) est démontable pour faciliter nettoyage et rangement, par exemple par un système d'emboîtement dans une moulure (10).

Selon le premier mode de réalisation de l'invention représenté en figure 1 la colonne (3) est plane et chaque moyen d'accrochage d'un plateau est formé de :
- une encoche sensiblement horizontale (4) débouchant sur le bord de la barre support (3) de largeur suffisante pour le passage d'un plateau (5),
- un pan coupé (6) à l'extrémité supérieure de la fente pour faciliter l'engagement et le dégagement du plateau en l'inclinant légèrement vers le haut,
- une plaque (7) dont le bord supérieur (8) sert d'appui au plateau. Cette plaque peut être plane ou cintrée pour s'engager dans une rainure (9) du fond du plateau.

Le deuxième mode de réalisation de la figure 2 diffère par les moyens d'accrochage et la section de la colonne pour réaliser une fonction équivalente.

La colonne (3') présente une section transversale en "U" et les moyens d'accrochage sont des rainures (4') légèrement inclinées afin que la valeur des jeux fonctionnels soit annulée par le poids du plateau et que les plateaux restent à l'horizontale.

La légère pointe (8') formée à l'extrémité inférieure de la rainure (4') s'engage dans une rainure (9) du fond du plateau et l'empêche de glisser.

La rainure (9) de la figure 3 est circulaire et continue mais pourrait présenter des variantes de réalisation, elle pourrait par exemple être discontinue et formée d'un ensemble de petites rainures rectilignes disposées à distance constante du bord, quelque soit la forme du plateau.

Selon la variante de la figure 5, la colonne (3) est réalisée en tôle pliée en "U" à sensiblement 90_{°} et comporte une pluralité de rainures (14) sensiblement horizontales dont les bordures latérales supérieures (15) présentent une légère fente de façon à réduire légérement la hauteur de l'ouverture et permettre le réglage de l'horizontalité du plateau (16) qui peut être un plateau creux carré ou une plaque à patisserie.

Le dispositif multi-plateaux selon l'invention est destiné à permettre simultanément la cuisson ou le réchauffage de plusieurs pizzas, tartes ou plats dans un four conventionnel.

Il peut servir aussi à l'entreposage en milieu froid ou chaud ainsi qu'au rangement et exposition verticale par exemple dans une pâtisserie.

Pour l'utilisation en cuisson, les plateaux peuvent être saisis par un moyen de préhension approprié par exemple celui de la figure 4, comportant une poignée (11), un linguet supérieur (12) et un linguet inférieur (13). Le linguet supérieur est fin et souple pour respectivement pouvoir se glisser sous la pizza ou tarte et permettre le passage du cran de retenue (14) du linguet inférieur jusqu'à la rainure (9) du fond de plateau.

Pour la cuisson l'appareil sera réalisé en fonte.

Pour l'entreposage il sera réalisé en tôle ou matière plastique.

Pour le rangement ou exposition verticale en rayon genre pâtisserie, il sera équipé de plateaux en verre.

Le dispositif selon l'invention peut présenter encore des variantes de réalisation, il peut également supporter des plateaux de forme variable.

## Revendications

1. Dispositif pour supporter simultanément une pluralité de plateaux par exemple des plateaux pour pizzas, comportant principalement : un pied (1) portant une colonne (3) verticale avec une pluralité de moyens d'accrochage appropriés pour recevoir les plateaux et les maintenir à l'horizontale, caractérisé en ce que les moyens d'accrochage sont des encoches ou rainures prévues dans la colonne et conformées spécialement pour recevoir et maintenir chacune directement un plateau.

2. Dispositif selon la revendication 1, caractérisé en ce que la colonne est plane et en ce que chaque moyen d'accrochage est formé de :
- une encoche sensiblement horizontale (4) débouchant sur le bord de la barre- support (3) de largeur suffisante pour le passage d'un plateau (5).
- un pan coupé (6) à l'extrémité supérieure de la fente pour faciliter l'engagement et le dégagement du plateau en l'inclinant légèrement vers le haut.
- une plaque (7) dont le bord supérieur (8) sert d'appui au plateau.

3. Dispositif selon la revendication 1, caractérisé en ce que la colonne présente une section en "U" et en ce que chaque moyen d'accrochage est formé d'une rainure légèrement inclinée (4') dont la légère pointe (8') sert d'appui au plateau.

4. Dispositif selon la revendication 1, caractérisé en ce que la colonne présente une section en "U" et en ce que chaque moyen d'accrochage est une rainure sensiblement horizontale (14) dont les bordures latérales supérieures (15) présentent une légère pente de façon à réduire légérement la hauteur de l'ouverture et permettre le réglage d'horizontalité du plateau.

5. Dispositif selon l'une quelconque des revendications précédentes caractérisé en ce que la colonne (3) est démontable.

6. Plateau pour coopérer avec le dispositif des revendications précédentes, caractérisé en ce que son fond comporte une rainure (9) à distance constante du bord pour coopérer avec un moyen (8, 8') de la colonne.

7. Plateau selon la revendication précédente, caractérisé en ce qu'il est circulaire.

8. Dispositif de préhension pour saisir un plateau selon l'une des revendications 5 et 6, caractérisé en ce qu'il est formé d'une poignée (11), d'un linguet supérieur fin et souple (12), d'un linguet inférieur (13) portant un cran de retenue (14) destiné à s'engager dans la rainure (9).
